# EUROPÄISCHE PATENTSCHRIFT

(11) **EP 3 460 782 B1**
(45) Veröffentlichungstag und Bekanntmachung des Hinweises auf die Patenterteilung: **09.09.2020**
(21) Anmeldenummer: 18194240.0
(22) Anmeldetag: 13.09.2018
(51) Int. Cl.: G09B 9/04

(54) **VORRICHTUNG UND VERFAHREN ZUR SIMULATION VON VERKEHRSHINDERNISSEN**
DEVICE AND METHOD FOR SIMULATING TRAFFIC OBSTACLES
DISPOSITIF ET PROCÉDÉ DESTINÉS À LA SIMULATION DES OBSTACLES À LA CIRCULATION

(30) Priorität: 22.09.2017 DE 102017121974
(43) Veröffentlichungstag der Anmeldung: 27.03.2019
(73) Patentinhaber: Fuchs, Reinhard, 85053 Ingolstadt (DE)
(72) Erfinder: Fuchs, Reinhard, 85053 Ingolstadt (DE)
(74) Vertreter: Staudt, Hans-Peter

(56) Entgegenhaltungen:
- AT-A4- 512 158
- US-A1- 2007 280 781

## Beschreibung

Die Erfindung betrifft eine Vorrichtung und ein Verfahren zur Simulation von Verkehrshindernissen auf einer Fahrbahn.

Die sachgerechte Ausbildung von Fahrern eines Kraftfahrzeugs ist seit vielen Jahrzehnten eine herausfordernde Aufgabe, deren Bedeutung mit ständig steigender Verkehrsdichte weiter zunimmt. Nach Ausbildung in einer Fahrschule und erfolgreicher Absolvierung der Führerscheinprüfung ist der Fahrer bzw. die Fahrerin jedoch in den allermeisten Fällen noch nicht in der Lage, ein Fahrzeug auch in kritischen Fahrsituationen sicher zu steuern. Viele Fahrer und Fahrerinnen werden mangels hierauf ausgerichteter Ausbildung nie wirklich dazu in der Lage sein.

Einzelne Fahrer und Fahrerinnen bilden sich jedoch weiter und absolvieren Fahrerlehrgänge, in denen das Meistern derartiger Situationen gelehrt und geübt wird. Hierzu sind als Hilfsmittel Vorrichtungen zur Simulation von Verkehrshindernissen auf einer Fahrbahn entwickelt worden.

Eine derartige Vorrichtung zur Simulation von Verkehrshindernissen zum Zweck des Fahrtrainings ist beispielsweise aus der EP 1 091 335 A2 bekannt. Diese bekannte Vorrichtung nutzt gesteuerte Wasserfontainen aus in der Fahrbahn eingebauten Düsen, um ein plötzlich auftretendes Verkehrshindernis darzustellen. Nachteilig für den Anwender ist dabei der relativ hohe Installationsaufwand in Form von in der Fahrbahn zu verlegenden Wasserleitungen nebst Ansteuerelektronik und -ventilen und die Gefahr des Nutzungsausfalls durch Einfrieren bei winterlichen Temperaturen. Zum Betrieb einer solchen Einrichtung sind zudem erhebliche Mengen an Wasser und Energie erforderlich. Des Weiteren kann die Bildung von Verschmutzungen durch Kalkflecken aus dem verwendeten Leitungswasser zu haftungsrelevanten Nachteilen der Betreiber von derartigen Einrichtungen zum Fahrtraining von Kraftfahrzeugführern führen. Auch ergibt sich bei winterlichen Temperaturen eine Rutsch- und Schleudergefahr für die betroffenen Kraftfahrzeuge und deren Fahrer und des Betriebspersonals der Einrichtung.

Eine andere Vorrichtung zur Simulation von Verkehrshindernissen zum Zweck des Fahrtrainings ist aus der EP 1 923 508 A1 bekannt und nutzt durch einen Antrieb betätigbare und in die Fahrbahn versenkbare Klapplamellen. Das Ausklappen der in der Fahrbahn versenkten Lamellen wird durch eine Steuereinrichtung mit entsprechenden Sensoren in der Fahrbahn ausgelöst, um ein überraschend auftretendes Verkehrshindernis dem Kraftfahrzeugführer darzustellen. Kurz vor Erreichen des Klapphindernisses werden die Lamellen durch einen kurz vor dem Hindernis in die Fahrbahn eingebauten Kraftfahrzeugsensor mit Hilfe der Steuereinrichtung wieder in die Aufnahmevorrichtung in der Fahrbahn eingefahren.

Nachteile dieser Ausführung sind insbesondere der aufwändige Fahrbahneinbau der Aufnahmevorrichtung der Klapplamellen und die Notwendigkeit eines elektrischen Luftkompressors nebst Netzstromversorgung. Einen weiteren Nachteil dieser Ausführung stellt die große Fläche der Klapplamellen dar. Aufgrund der Länge des Hebelarms im Betätigungsstrang der Lamellen kann es bei starkem Wind zu Funktionsstörungen durch hohe Windlast kommen. Das Ein- und Ausklappen der Lamellen ist dann unter Umständen nur eingeschränkt möglich.

Aus der AT 512 158 A4 ist ein Hindernis für eine Fahrertrainingsvorrichtung bekannt, wobei eine Hülle von einer tiefen Ruheposition in eine höhere Arbeitsposition verfahrbar ist. bei einer Annäherung eines Trainingsfahrzeugs wird die Hülle in die Arbeitsposition gebracht, um ein auftretendes Hindernis zu simulieren.

Der Erfindung liegt die Aufgabe zugrunde, eine Vorrichtung und ein Verfahren zur Simulation von Verkehrshindernissen auf einer Fahrbahn bereitzustellen, die beziehungsweise das insbesondere im Hinblick auf die im Zusammenhang mit dem vorstehend beschriebenen Stand der Technik genannten Nachteile, verbessert sind.

Gelöst wird diese Aufgabe durch eine Vorrichtung zur Simulation von Verkehrshindernissen auf einer Fahrbahn mit den Merkmalen des Patentanspruchs 1 sowie ein Verfahren zur Simulation von Verkehrshindernissen auf einer Fahrbahn mit den Merkmalen des Patentanspruchs 8. Vorteilhafte Ausgestaltungen sind jeweils Gegenstand der abhängigen Patentansprüche. Es wird darauf hingewiesen, dass die in den Patentansprüchen einzeln aufgeführten Merkmale auch in beliebiger und technologisch sinnvoller Weise miteinander kombiniert werden können und somit weitere Ausgestaltungen der Erfindung aufzeigen.

Die erfindungsgemäße Vorrichtung zur Simulation von Verkehrshindernissen auf einer Fahrbahn weist mindestens eine Lichtquelle auf, die in eine Fahrbahn einbaubar und dazu ausgelegt ist, auf entsprechende Ansteuerung hin Lichtsignale auszusenden, mindestens einen Sensor, der dazu ausgelegt ist, einen Überfahrstatus zu ermitteln, sowie eine Elektronikbaugruppe, die dazu ausgelegt ist, die mindestens eine Lichtquelle anzusteuern und Daten von dem mindestens einen Sensor zu empfangen und auszuwerten.

Die Erfindung verwendet somit anstelle eines materiellen Hindernisses in Form von beispielsweise Lamellen oder Wasser ein nicht-materielles Hindernis in Form von Lichtsignalen. Es besteht somit keine Gefahr, dass ein Kraftfahrzeug bei Nutzung dieser Vorrichtung mit Bauelementen dieser Vorrichtung zusammenprallt oder auf sonstige Weise beschädigt wird. Bei Verwendung mehrerer derartiger Vorrichtungen beziehungsweise einer Vorrichtung mit einer Vielzahl von Lichtquellen können von verschiedenen Szenen und Hindernistypen mit der bestehenden Hardware durch Variation von Farbe, zeitlicher Variation und räumlicher Variation der Leuchtsequenzen dieser Lichtsignale dargestellt werden.

Eine vorteilhafte Ausführungsform der erfindungsgemäßen Vorrichtung weist eine in die Fahrbahn einbaubare, vorzugsweise zylindrische Aufnahme- und Haltevorrichtung auf, in die ein vorzugsweise zylindrisches und wasserdichtes Gehäuse eingesetzt ist, in welchem die mindestens eine Lichtquelle und der mindestens eine Sensor angeordnet sind. Das Gehäuse ist vorzugsweise so ausgeführt und montiert, dass es für Wartungsarbeiten oder Austausch leicht aus der Fahrbahn entnommen werden kann.

Die Stromversorgung der mindestens einen Lichtquelle und des mindestens einen Sensors (12, 13, 16, 17) kann mittels eines wiederaufladbaren Akkumulators erfolgen, der in dem Gehäuse angeordnet ist. Die Aufladung des Akkumulators oder der Akkumulatoren kann durch einen in oder unterhalb der Fahrbahn verlegten Kabelanschluss erfolgen, wobei die Aufladung kontaktlos per elektromagnetischer Induktion oder durch entsprechende Kontakte oder auch fotovoltaisch erfolgen kann. Es versteht sich, dass eine fotovoltaische Stromversorgung auch ohne Zuleitung möglich ist.

Als Lichtquelle können Leuchtdioden, insbesondere Hochleistungsleuchtdioden verwendet werden. Es ist jedoch auch die Verwendung anderer Leuchtmittel möglich, beispielsweise Lasersysteme, sowie eine Kombination unterschiedlicher Leuchtmittel. Die Leuchtmittel sind vorzugsweise separat zeitlich und hinsichtlich ihrer Helligkeit und gegebenenfalls auch ihrer Farbe per Fernübertragung oder durch autonome Reaktion ansteuerbar. Die Auslösung der Lichtsignale kann manuell erfolgen oder dann, wenn das Kraftfahrzeug einen bestimmten Punkt vor dem simulierten Hindernis passiert, wobei Letzteres detektiert wird durch einen Kraftfahrzeugdetektor, und die Auslösung kann erfolgen per Fernschaltung über Funk oder kabelgebunden.

In einer Ausführungsform weist die erfindungsgemäße Vorrichtung einen Beschleunigungssensor und/oder einen Helligkeitssensor und/oder eine Infrarot-Reflex-Lichtschranke und/oder einen Doppler-Radarsensor auf. Je nach Anwendungsfall und Ausführungsform verfügt die Vorrichtung über eine oder einer Kombination aus mehreren Sensoren wie RADAR, Doppler-RADAR, LIDAR, SONAR, Helligkeitssensor, IR-Reflexsensor, Laserreflexsensor, Thermosäule, passiver Mikrowellendetektor, Magnetfeldsensor, induktiver (Metall)-Sensor, kapazitiver Sensor, Beschleunigungssensor, Drucksensor, barometrischer Sensor, Mikrofon, Videokamera, Zeilenkamera, optisches Spektroskop oder anderen Sensoren zur Erfassung des berührenden oder berührungslosen Überfahrens des lichtaussendenden Teils der Vorrichtung, das heißt des durch Licht simulierten Hindernisses, durch ein Kraftfahrzeug.

Ein Beschleunigungssensor kann angeordnet sein an einer das Gehäuse im betriebsbereiten Zustand nach oben abschließenden und vertikal bewegbar gelagerten Kuppel. Zur bewegbaren und vorzugsweise federnden Lagerung der Kuppel können in dem Gehäuse ein beweglicher Kolben und eine oder mehrere Dichtungen und Führungen, beispielsweise in Form von Kolbenringen, vorgesehen sein.

Die Sensoren können, je nach Einsatzumgebung und Zusammenstellung, teilweise, einzeln oder in Kombinationen durch Fusion ihrer Ausgangssignale verwendet werden und erlauben ein Erfassen des Überfahrens mit der Kraftfahrzeugkontur oder bei Kontakt mit einem Kraftfahrzeugreifen mit hoher zeitlicher Auflösung.

Es kann eine Datenfernübertragung zur Übermittlung von Daten auf eine Anzeige- und Eingabevorrichtung vorgesehen sein. Eine derartige Ausführungsform der erfindungsgemäßen Vorrichtung verfügt vorzugsweise über eine bidirektionale leitungsgebundene oder drahtlose Datenschnittstelle zur Konfiguration, Auslösung und zur Abfrage von Sensor- oder Betriebsdaten. Aus dem zeitlichen Verlauf von Auslösung und Überfahren der Lichtsignale ist hierdurch die Ableitung von verschiedenen Größen der Kraftfahrzeugbewegung und Eigenschaften des Kraftfahrzeugführers (Reaktionszeit usw.) möglich.

Gegenstand der Erfindung ist zudem ein Verfahren zur Simulation von Verkehrshindernissen auf einer Fahrbahn unter Verwendung der erfindungsgemäßen Vorrichtung. Dies ermöglicht eine interaktive Simulation von Verkehrshindernissen durch Lichtsignale, wobei die die Lichtsignale aussendenden Teile der Vorrichtung in die Fahrbahn eingebaut sind, zum Zweck der Kraftfahrzeugführerschulung. Es kann eine Mehrzahl dieser Vorrichtungen beziehungsweise eine Vorrichtung mit einer Mehrzahl von Lichtquellen verwendet werden und diese können so angesteuert werden, dass mit diesen unterschiedliche Fahrszenarien und Hindernistypen mittels entsprechender Lichtsignalabläufe simuliert werden.

Die Auslösung der Lichtsignale beziehungsweise der Lichtsignalabläufe kann manuell erfolgen oder automatisch mittels eines Kraftfahrzeugdetektors dann, wenn der Kraftfahrzeugdetektor detektiert, dass das Kraftfahrzeug einen bestimmten Punkt vor dem simulierten Hindernis passiert, wobei die Ansteuerung zur Auslösung der Lichtsignale beziehungsweise der Lichtsignalabläufe per Fernschaltung über Funk oder kabelgebunden erfolgen kann.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen. Die Erfindung ist jedoch nicht auf die gezeigte Ausführungsvariante beschränkt. Insbesondere umfasst die Erfindung, soweit es technisch sinnvoll ist, beliebige Kombinationen der technischen Merkmale, die in den Ansprüchen aufgeführt oder in der Beschreibung als erfindungsrelevant beschrieben sind.

Es zeigen:
Fig. 1 eine geschnittene Seitenansicht einer Ausführungsform einer erfindungsgemäßen Vorrichtung zur Simulation von Verkehrshindernissen auf einer Fahrbahn,
Fig. 2 die Draufsicht auf die Ausführungsform gemäß Fig. 1, wobei die in Fig. 1 durch ein stilisiertes Fahrzeug angedeutete Fahrtrichtung in Fig. 2 durch einen Pfeil gekennzeichnet ist.

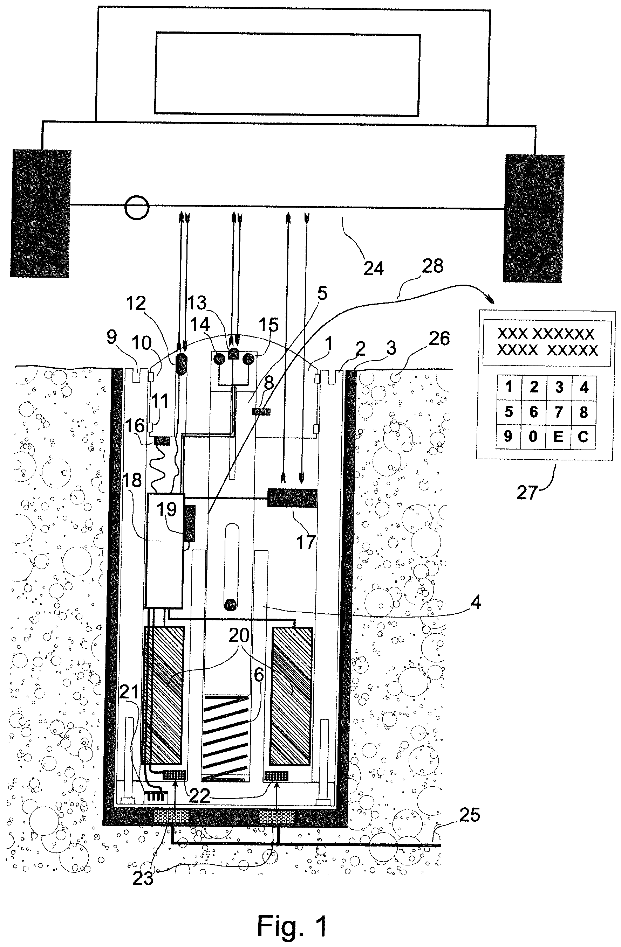

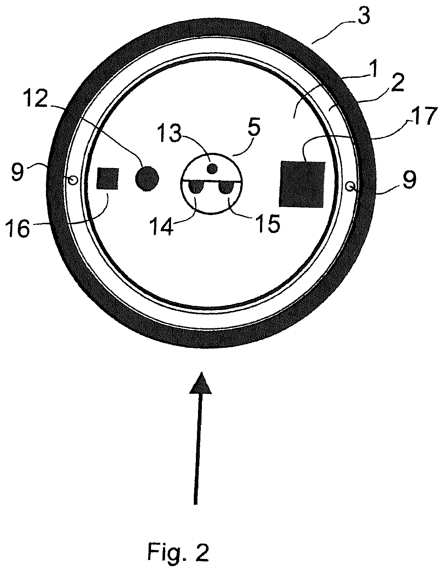

Im Folgenden wird unter Bezug auf die Figuren 1 und 2 eine Ausführungsform einer erfindungsgemäßen Vorrichtung zur Simulation von Verkehrshindernissen auf einer Fahrbahn näher beschrieben. Es wird darauf hingewiesen, dass die Figuren schematisch ausgeführt und im Maßstab nicht einheitlich sind.

Die in den Figuren schematisch dargestellte Vorrichtung zur Simulation von Verkehrshindernissen auf einer Fahrbahn, im Folgenden auch Simulationsvorrichtung genannt, weist eine in die Fahrbahn 26 fest einbaubare, vorzugsweise zylindrische Aufnahme- und Haltevorrichtung 3, auf, in welche ein ebenfalls vorzugsweise zylindrisches Gehäuse 2 eingesetzt ist. Eine Haltevorrichtung 3 ermöglicht den einfachen Ein- und Ausbau des Gehäuses 2 mit Hilfe von einem oder mehreren Entnahmegewinden 9 und hält das Gehäuse 2 in einer festen Ausrichtung zum Fahrbahnverlauf.

Das Gehäuse 2 enthält eine Stromversorgung durch wiederaufladbare Akkumulatoren 20 und entsprechende Auflademöglichkeiten in Form von beispielsweise elektrischen Kontakten 21 oder in Form einer Ladeelektronik mit Empfangsspulen 22 zum kontaktlosen, induktiven Laden. Bei Nutzung des kontaktlosen Ladens, ist die Haltevorrichtung 3 mit entsprechenden Sendespulen 23 und einer Stromversorgungszuleitung 25 ausgestattet. Das zylindrische Gehäuse 2 ist beispielsweise aus Metall gefertigt und an seinem im funktionsgemäßen Einbauzustand oberen Ende durch eine Kuppel 1 aus beispielsweise transparentem Kunststoff abgeschlossen. Die Kuppel 1 kann sich vertikal in dem zylindrischen Gehäuse 2 bewegen und ist mit einem Kolbenring 11 gelagert und mit einer Dichtung 10 gegen die Umgebung abgedichtet.

Lichtquellen sind als Leuchtdioden 14, 15, vorzugsweise als Hochleistungsleuchtdioden (LED) ausgeführt. Die Leuchtdioden 14, 15 sind zur Ableitung der bei ihrem Betrieb entstehenden Verlustwärme auf das obere Ende eines Aluminiumstabs 5 in eine passende Ausfräsung eingeklebt und befinden sich innerhalb einer Bohrung in der Kuppel 1. Die Strahlrichtung der Leuchtdioden 14, 15 ist vorzugsweise entgegen der Fahrtrichtung der Kraftfahrzeuge 24 auf der Fahrbahn 26 ausgerichtet, um die bestmögliche Sichtbarkeit durch die übenden Kraftfahrzeugführer sicher zu stellen. Je nach Anwendungsfall sind jedoch auch andere Ausrichtungen möglich.

Der Aluminiumstab 5 ist durch ein Verdrehschutzelement 8 mit der Kuppel 1 verbunden. Der Aluminiumstab 5 ist in einem Aufnahmeelement 4 in einem abnehmbaren Boden des zylindrischen Gehäuses 2 vertikal beweglich gehalten und durch eine Druckfeder 6 federnd gelagert. Beim Überfahren mit einem Kraftfahrzeugrad kann so die Kuppel 1 mit dem Aluminiumstab 5 einfedern und stellt so keinen nennenswerten Fahrwiderstand dar.

Zur Ermittlung des Überfahrstatus befinden sich in der dargestellten Ausführung vier separate Sensoren: Ein Beschleunigungssensor 16 an der Kuppel 1, ein Helligkeitssensor 13 im oberen Ende des Aluminiumstabs 5, eine Infrarot-Reflex-Lichtschranke 12 in einer Bohrung in der Kuppel 1 und ein Doppler-Radarsensor 17 unterhalb der Kuppel 1.

Eine Elektronikbaugruppe 18 beinhaltet die notwendigen Funktionsgruppen für eine strombegrenzte Ansteuerung der Leuchtdioden 14, 15, eine Ladeelektronik für die Akkumulatoren 20, Funksender und -empfänger zur ferngesteuerten Auslösung der Leuchtdioden 14, 15, zur Fernkonfiguration von Betriebsparametern, sowie zur Fernübertragung von Daten, insbesondere des Überfahrstatus. Der Überfahrstatus wird durch simultane Auswertung und Verknüpfung der Ausgangssignale der vier Sensoren ermittelt. Diese Fusion der Sensorsignale erhöht die Zuverlässigkeit der Detektion, insbesondere bei Bewässerung der Fahrbahn zur Herbeiführung von ungünstigen Fahrbedingungen wie z. B. Aquaplaning. Der Beschleunigungssensor 16 liefert nur dann ein Ausgangssignal über einem Schwellwert, wenn die Kuppel 1 durch ein Kraftfahrzeugrad getroffen bzw. überfahren wurde. Die anderen Sensoren liefern auch dann Signale über einem Schwellwert, wenn lediglich die senkrechte Projektion der Außenkontur des Kraftfahrzeugs 24 auf die Fahrbahn die Kuppel 1 passiert. Somit kann die Vorrichtung auch ohne direkten Kontakt mit dem Kraftfahrzeug eine Kollision erkennen, die bei einem physischen Hindernis mit vertikaler Ausdehnung an der Position des Hindernisses auf der Fahrbahn aufgetreten wäre.

Die Auswertung der Sensorsignale innerhalb der Elektronikbaugruppe 18 erfolgt nach geeigneter Aufbereitung mittels nicht gezeigten Verstärkern, Filtern und Analog-Digitalwandlern durch einen oder mehrere Mikrocontroller mit entsprechenden Programmalgorithmen. Das Überfahren der Sensoren durch die Projektion der Kraftfahrzeugkontur und das Vorüberziehen des Kraftfahrzeugunterbodens an den Sensoren, bewirkt einen charakteristischen zeitlichen Verlauf der Verhältnisse der elektrischen Ausgangssignale der verschiedenen Sensoren in Bezug auf Amplituden, zeitliche Verläufe der Signalintensitäten und der spektralen Zusammensetzung der elektrischen Sensorausgangssignale im zeitlichen Verlauf. Ein ebenfalls nicht gezeigter Mikrocontroller steuert ebenfalls die Einrichtung für die bidirektionale Funkkommunikation zur Datenfernübertragung 28 der Betriebsparametern und des Überfahrstatus auf eine Anzeige- und Eingabevorrichtung 27. Zur Abstrahlung der Funksignale zum Zweck der Datenkommunikation, befindet sich eine Antenne 19 im Innern des Gehäuses 2 der Vorrichtung. Mittels der Funkkommunikationseinrichtung können die verschiedenen, je nach Ausführungsform farbigen Leuchtdioden 14, 15 mit geringer Latenzzeit in ihrer Helligkeit verändert werden, um so durch additive Farbmischung, verschiedene Farben des von der Vorrichtung abgestrahlten Lichts zu erzeugen. Bei Nutzung mehrerer Leuchtdioden 14, 15 können diese per Funk derart kombiniert angesteuert werden, dass z. B. der Eindruck von sich bewegenden Verkehrshindernissen auf der Fahrbahn entsteht. Gleichfalls ist auf diese Weise die Darstellung von verschiedenen Szenen und Hindernistypen mit den in der Fahrbahn vorhandenen Leuchtdioden 14, 15 durch Variation von Farben, zeitlicher Variation der Helligkeiten und räumlicher Variation der Leuchtsequenzen möglich. Durch Erfassung des zeitlichen Verlaufs von Auslösung und Überfahren des durch die Lichtquelle simulierten Hindernisses ist die Ableitung von verschiedenen Größen der Kraftfahrzeugbewegung und Fahreigenschaften des Kraftfahrzeugführers wie z. B. Reaktionszeiten möglich.

Durch die in das Gehäuse 2 der Vorrichtung eingebauten Sensoren 12, 13, 14, 16 und 17 der Vorrichtung kann sowohl ein direkter Kontakt zum Kraftfahrzeugrad, als auch ein berührungsloses Überfahren erfasst und gemeldet werden. Die Erfindung ist jedoch nicht auf eine solche Ausführungsform beschränkt. Insbesondere müssen die mindestens eine Lichtquelle der Vorrichtung und der mindestens eine Sensor der Vorrichtung nicht in räumlicher Nähe zueinander angeordnet sein. Die Erfindung umfasst vielmehr auch solche Ausführungsformen, bei denen als Sensoren, die ein Überfahren des durch Licht simulierten Hindernisses detektieren, berührungslose Systeme wie beispielsweise ein oder mehrere Videokameras mit einem System zur Bildverarbeitung und Mustererkennung verwendet werden oder andere Sensoren zur Positionserfassung des Kraftfahrzeugs, die in oder in der Nähe der Fahrbahn, beispielsweise an den Fahrbahnrändern, angeordnet sind, beispielsweise Radar- oder Sonarsysteme, die so ausgelegt sind, dass sie die Position des Kraftfahrzeugs, insbesondere laufzeitbasiert, hinreichend genau erfassen können.

Mit anderen Worten, die erfindungsgemäße Vorrichtung umfasst somit alternativ auch solche Ausführungsformen, bei denen das berührende oder berührungslose Überfahren des lichtaussendenden Teils der Vorrichtung, das heißt des durch Licht simulierten Hindernisses, durch Echtzeitpositionsbestimmung des Kraftfahrzeugs mittels GPS oder eines anderen, laufzeitbasierten, lokalen Positionierungssystem erfasst werden. Geeignete laufzeitbasierte Positionierungsverfahren können beispielsweise basieren auf technischen Mitteln wie Mikrowellenlaufzeitmessung, Ultrabreitband-Pulslaufzeitmessung oder Ultraschalllaufzeitmessung und setzen eine lokale Infrastruktur im Umfeld der Fahrbahn voraus. In einem derartigen Fall fungieren diese Mittel als Sensor der Vorrichtung zur Simulation von Verkehrshindernissen auf einer Fahrbahn im Sinne der vorliegenden Erfindung.

Durch den gleichzeitigen Einsatz verschiedener Sensoren und Fusion derer Ausgangssignale kann eine hohe Detektionssicherheit erreicht werden.

Mehrere Gehäuse 2 mit Lichtquellen 14, 15 können in eine Fahrbahn eingebaut werden, um so im Verbund ein räumlich und zeitlich variables Hindernis zu simulieren.

Wie beschrieben, wird das Gehäuse 2 mit den Lichtquellen 14, 15 in einen fest in die Fahrbahn eingelassenen Halter eingesetzt und kann aus diesem zur Umpositionierung oder für Wartungsarbeiten entnommen werden. Die Stromversorgung kann durch wiederaufladbare Batterien, über elektrische Kontakte oder kontaktlos per elektromagnetischer Induktion erfolgen. Das Gehäuse 2 mit den Lichtquellen 14, 15 kann auch beheizbar ausgeführt werden.

Weitere mögliche Verwendungsweisen der vorstehend beschriebenen Vorrichtungen sowie mögliche Abwandlungen hiervon als entsprechende Ausführungsformen eines erfindungsgemäßen Verfahrens sowie diesbezügliche weitere Aspekte werden nachfolgend erläutert.

Die Vorrichtung kann einerseits zum Zweck der Kraftfahrzeugführerschulung auf einem Fahrtrainingsgelände, andererseits jedoch auch in der Verkehrsleittechnik eingesetzt werden.

Die Vorrichtung meldet Zustandsänderungen wie z. B. das Überfahren durch ein Kraftfahrzeug per Datenfernübertragung 28. Die per Datenfernübertragung 28 gekoppelte und auch als Steuervorrichtung fungierende Anzeige- und Eingabevorrichtung 27 dient zur Aktivierung und Konfiguration der Lichtquellen in den einzelnen Simulationsvorrichtungen und zur Erfassung des Überfahrstatus der lichtaussendenden Teile der Simulationsvorrichtung, sowie zur Erfassung von Betriebsparametern wie z. B. dem Ladezustand der Akkumulatoren.

Das Aktivieren der Lichtquellen, die mögliche Konfiguration von Parametern der Ansteuer- und Auswerteelektronik der Sensoren und die Meldung oder die Abfrage von Betriebszustand und Überfahrstatus kann von einer zentralen oder von mehreren dezentralen Steuereinrichtungen per Datenfernübertragung erfolgen, vorzugsweise über Funk. Die Auslösung der Lichtquellen kann über die Steuereinrichtung manuell durch einen Fahrtrainer oder automatisch durch Sensoren in der Fahrbahn oder an den Fahrbahnrändern erfolgen.

Alternativ ist eine Auslösung der Lichtquellen durch Echtzeitpositionsbestimmung des Kraftfahrzeugs mittels GPS oder anderen, laufzeitbasierten Positionierungssystemen mit lokaler Infrastruktur beim Passieren einer festgelegten Fahrbahnposition per Funkübertragung denkbar. Die letztgenannte Auslösetechnik lässt auch sehr kurzfristige Änderungen der vom Fahrtrainer gewünschten Auslöseposition im Fahrbahnverlauf zu, da keine physische Umpositionierung von Sensoren für Kraftfahrzeuge an oder in der Fahrbahn erforderlich ist. Der zeitliche Abstand zwischen Auslösung und Überfahren des Sensors kann zur Beurteilung der Reaktionszeiten des Fahrers herangezogen werden. Bei Nutzung eines Doppler-Radarsensors als Sensor der Simulationsvorrichtung, entweder am Gehäuse 2 oder am Fahrbahnrand, ist es zudem möglich, die Momentangeschwindigkeit des Kraftfahrzeugs beim Überfahren der Simulationsvorrichtung zu bestimmen, und diese zur Bewertung der Fahrerleistung zu nutzen.

Zudem ist es möglich, eine Anzeige- und Eingabevorrichtung 27 so auszuführen, dass sie in dem Kraftfahrzeug selbst mitgeführt werden kann. Hierdurch wird die Möglichkeit geschaffen, dem Fahrer des Kraftfahrzeugs eine direkte Rückmeldung zu geben.

### - Bezugszeichenliste -

- 1: Kuppel
- 2: Gehäuse
- 3: Aufnahme- und Haltevorrichtung
- 4: Aufnahmeelement
- 5: Aluminiumstab
- 6: Druckfeder
- 8: Verdrehschutzelement
- 9: Entnahmegewinde
- 10: Dichtung
- 11: Kolbenring
- 12: Infrarot-Reflex-Lichtschranke
- 13: Helligkeitssensor
- 14: Leuchtdiode
- 15: Leuchtdiode
- 16: Beschleunigungssensor
- 17: Doppler-Radarsensor
- 18: Elektronikbaugruppe
- 19: Antenne
- 20: Akkumulator
- 21: elektrische Kontakte
- 22: Empfangsspulen
- 23: Sendespule
- 24: Kraftfahrzeug
- 25: Stromversorgungszuleitung
- 26: Fahrbahn
- 27: Anzeige- und Eingabevorrichtung
- 28: Datenfernübertragung

## Patentansprüche

1. Vorrichtung zur Simulation von Verkehrshindernissen auf einer Fahrbahn, **gekennzeichnet durch**
mindestens eine Lichtquelle (14, 15), die in eine Fahrbahn (26) einbaubar und dazu ausgelegt ist, auf entsprechende Ansteuerung hin Lichtsignale auszusenden,
mindestens einen Sensor (12, 13, 16, 17), der dazu ausgelegt ist, einen Überfahrstatus zu ermitteln,
und eine Elektronikbaugruppe (18), die dazu ausgelegt ist, die mindestens eine Lichtquelle (14, 15) anzusteuern und Daten von dem mindestens einen Sensor (12, 13, 16, 17) zu empfangen und auszuwerten.

2. Vorrichtung nach Anspruch 1, **gekennzeichnet durch** eine in die Fahrbahn (26) einbaubare, vorzugsweise zylindrische Aufnahme- und Haltevorrichtung (3), in die ein vorzugsweise zylindrisches Gehäuse (2) eingesetzt ist, in welchem die mindestens eine Lichtquelle (14, 15) und der mindestens eine Sensor (12, 13, 16, 17) angeordnet sind.

3. Vorrichtung nach Anspruch 1 oder 2, **gekennzeichnet durch** eine Stromversorgung der mindestens einen Lichtquelle (14, 15) und/oder des mindestens einen Sensors (12, 13, 16, 17) mittels mindestens eines wiederaufladbaren Akkumulators (20), der in dem Gehäuse (2) angeordnet ist.

4. Vorrichtung nach einem der vorstehenden Ansprüche, **dadurch gekennzeichnet, dass** die mindestens eine Lichtquelle mindestens eine Leuchtdiode (14, 15) aufweist.

5. Vorrichtung nach einem der vorstehenden Ansprüche, **dadurch gekennzeichnet, dass** sie einen Beschleunigungssensor (16) und/oder einen Helligkeitssensor (13) und/oder eine Infrarot-Reflex-Lichtschranke (12) und/oder einen Doppler-Radarsensor (17) als den mindestens einen Sensor aufweist.

6. Vorrichtung nach Anspruch 5, **dadurch gekennzeichnet, dass** der Beschleunigungssensor (16) angeordnet ist an einer Kuppel (1), die das Gehäuse (2) im betriebsbereiten Zustand nach oben abschließt und vertikal bewegbar gelagert ist.

7. Vorrichtung nach einem der vorstehenden Ansprüche, **gekennzeichnet durch** eine Datenfernübertragung (28) zur Übermittlung von Daten auf eine Anzeige- und Eingabevorrichtung (27).

8. Verfahren zur Simulation von Verkehrshindernissen auf einer Fahrbahn unter Verwendung einer Vorrichtung nach einem der Ansprüche 1 bis 7, wobei die die Lichtsignale aussendenden Teile der Vorrichtung in die Fahrbahn eingebaut sind.

9. Verfahren nach Anspruch 8, **dadurch gekennzeichnet, dass** eine Mehrzahl von Lichtquellen (14, 15) verwendet wird und dass diese so angesteuert werden, dass mit diesen unterschiedliche Fahrszenarien und Hindernistypen mittels entsprechender Lichtsignalabläufe simuliert werden.

10. Verfahren nach Anspruch 8 oder 9, **dadurch gekennzeichnet, dass** die Auslösung der Lichtsignale beziehungsweise der Lichtsignalabläufe manuell erfolgt oder automatisch mittels eines Kraftfahrzeugdetektors dann, wenn der Kraftfahrzeugdetektor das Passieren des Kraftfahrzeugs (24) detektiert, wobei die Ansteuerung zur Auslösung der Lichtsignale beziehungsweise der Lichtsignalabläufe per Fernschaltung über Funk oder kabelgebunden erfolgt.

## Claims

1. Device for simulating traffic obstacles on a road, **characterized by** at least one light source (14, 15) adapted to be installed in a road (26) and adapted to emit light signals in response to respective activation, at least one sensor (12, 13, 16, 17) adapted to detect an overrun status, and an electronic component (18) adapted to control the at least one light source (14, 15) and to receive and to evaluate data from the at least one sensor (12, 13, 16, 17).

2. Device according to claim 1, **characterized by** a preferably cylindrical receiving and holding device (3) adapted to be installed in the road (26) into which a preferably cylindrical housing (2) is inserted in which the at least one light source (14, 15) and the at least one sensor (12, 13, 16, 17) are arranged.

3. Device according to claim 1 or 2, **characterized by** a power supply of the at least one light source (14, 15) and/or the at least one sensor (12, 13, 16, 17) by means of at least one rechargeable accumulator (20) arranged in the housing (2).

4. Device according to one of the preceding claims, **characterized in that** the at least one light source comprises at least one light emitting diode (14, 15).

5. Device according to one of the preceding claims, **characterized in that** it comprises an acceleration sensor (16) and/or a brightness sensor (13) and/or an infrared reflex light barrier (12) and/or a Doppler radar sensor (17) as the at least one sensor.

6. Device according to claim 5, **characterised in that** the acceleration sensor (16) is arranged at a dome (1) which closes the housing (2) at the top in a state ready to be operated and which is mounted such as to be vertically movable.

7. Device according to one of the preceding claims, **characterized by** a remote data transmission (28) for transmitting data to a display and input device (27).

8. Method for simulating traffic obstacles on a road using a device according to one of the claims 1 to 7, wherein the parts of the device emitting the light signals are installed in the road.

9. Method according to claim 8, **characterized in that** a plurality of light sources (14, 15) are used and controlled in such a way as to simulate different driving scenarios and obstacle types using respective light signal sequences.

10. Method according to claim 8 or 9, **characterized in that** the light signals or the light signal sequences are triggered manually or automatically by means of a motor vehicle detector when the motor vehicle detector detects the passing of the motor vehicle (24), wherein the activation for triggering the light signals or the light signal sequences is carried out by remote control via radio or by wire.

## Revendications

1. Dispositif de simulation d'obstacles à la circulation sur une chaussée, **caractérisé par**
au moins une source de lumière (14, 15) qui peut être installée dans une chaussée (26) et qui est conçue pour émettre des signaux lumineux en réponse à une activation correspondante,
au moins un capteur (12, 13, 16, 17) qui est conçu pour détecter un état de franchissement,
et un module électronique (18) qui est conçu pour commander au moins une source de lumière (14, 15) et pour recevoir et évaluer des données provenant dudit au moins un capteur (12, 13, 16, 17).

2. Dispositif selon la revendication 1, **caractérisé par** un dispositif de réception et de maintien (3) de préférence cylindrique, qui peut être installé dans la chaussée (26) et dans lequel est inséré un boîtier (2) de préférence cylindrique, dans lequel sont disposés ladite au moins une source de lumière (14, 15) et ledit au moins un capteur (12, 13, 16, 17).

3. Dispositif selon la revendication 1 ou 2, **caractérisé par** une alimentation électrique de ladite au moins une source de lumière (14, 15) et/ou dudit au moins un capteur (12, 13, 16, 17) au moyen d'au moins un accumulateur rechargeable (20) qui est disposé dans le boîtier (2).

4. Dispositif selon l'une des revendications précédentes, **caractérisé en ce que** ladite au moins une source de lumière présente au moins une diode électroluminescente (14, 15).

5. Dispositif selon l'une des revendications précédentes, **caractérisé en ce qu'**il présente un capteur d'accélération (16) et/ou un capteur de luminosité (13) et/ou une barrière lumineuse infrarouge à réflexion (12) et/ou un capteur radar à effet Doppler (17) en tant que ledit au moins un capteur.

6. Dispositif selon la revendication 5, **caractérisé en ce que** le capteur d'accélération (16) est disposé sur un dôme (1) qui ferme le boîtier (2) vers le haut à l'état de fonctionnement et qui est monté de manière à pouvoir se déplacer verticalement.

7. Dispositif selon l'une des revendications précédentes, **caractérisé par** une transmission de données à distance (28) pour transmettre des données à un dispositif d'affichage et d'entrée (27).

8. Procédé de simulation d'obstacles à la circulation sur une chaussée en utilisant un dispositif selon l'une des revendications 1 à 7, dans lequel les parties du dispositif émettant les signaux lumineux sont installées dans la chaussée.

9. Procédé selon la revendication 8, **caractérisé en ce qu'**une pluralité de sources de lumière (14, 15) est utilisée et que celles-ci sont commandées de telle sorte qu'elles permettent de simuler différents scénarios de conduite et types d'obstacles au moyen de séquences de signaux lumineux correspondantes.

10. Procédé selon la revendication 8 ou 9, **caractérisé en ce que** les signaux lumineux ou les séquences de signaux lumineux sont déclenché(e)s manuellement ou automatiquement au moyen d'un détecteur de véhicule automobile lorsque le détecteur de véhicule automobile détecte le passage du véhicule automobile (24), la commande de déclenchement des signaux lumineux ou des séquences de signaux lumineux étant effectuée par commutation à distance par radio ou par câble.
